# EUROPEAN PATENT SPECIFICATION

(11) **EP 2 579 414 B1**
(45) Date of publication and mention of the grant of the patent: **15.07.2015**
(21) Application number: 11789434.5
(22) Date of filing: 30.05.2011
(51) Int. Cl.: H02J 3/14, H02J 13/00, H04Q 9/00, G01D 4/00

(54) **ROBOT AND POWER-CONSUMPTION ESTIMATION SYSTEM**
ROBOTER UND STROMVERBRAUCHSMESSSYSTEM
ROBOT ET SYSTÈME D'ESTIMATION DE LA CONSOMMATION DE COURANT

(30) Priority: 31.05.2010 JP 2010124811
(43) Date of publication of application: 10.04.2013
(73) Proprietor: Eneres Co., Ltd., Tokyo 120-0034 (JP); The Japan Research Institute, Limited, Tokyo 102-0082 (JP)
(72) Inventor: IKEDA, Motohide, Tokyo 120-0034 (JP); WATANABE, Ken, Tokyo 120-0034 (JP); INOUE, Makoto, Kawasaki-shi, Kanagawa 211-0063 (JP)
(74) Representative: Butenschön, Antje
(86) International application number: PCT/JP2011/003011
(87) International publication number: WO 2011/152020

(56) References cited:
- WO-A1-2006/049356
- DE-A1- 19 530 825
- JP-A- 2002 186 068
- JP-A- 2003 018 670
- JP-A- 2003 333 768
- US-A1- 2004 254 654
- US-A1- 2009 062 970

## Description

### TECHNICAL FIELD

The present invention relates to a robot and a power consumption estimating system for turning devices ON and OFF.

### RELATED ART

Patent Document 1 discloses a technique for estimating power consumption of a device by acquiring load information indicating a processing load, such as accesses per unit time or CPU usage rate of an electric device, referencing a storage means that stores power consumption of the electric device for the processing load in advance as power consumption estimation information, and identifying the power consumption corresponding to the acquired load information.

Patent Document 1: Japanese Patent Application Publication No. 2009-159712 DE195 30 825 A1 discloses a technique for determining power consumption of an electric device. A central switching mechanism turns on and off the power supply for the electrical device and total power consumption in the facility before and after the switching is measured.

### DISCLOSURE OF THE INVENTION

### PROBLEMS TO BE SOLVED BY THE INVENTION

With the above technique for estimating the power consumption of an electric device, the power consumption of the electric device for the processing load must be stored in advance in the storage means, and in the case of a device whose power consumption has not been identified in advance, the power consumption of the device cannot be identified.

The present invention provides a technique that enables estimation of the power consumption of a device even when the power consumption of the device has not been identified in advance.

### MEANS FOR SOLVING THE PROBLEMS

In order to accomplish the above mentioned object, the present invention provides a robot according to claim 1.

In the robot described above, one of the plurality of devices may be capable of operating with a plurality of setting conditions including a first setting condition and a second setting condition, the device manipulating section may turn the device ON with the first setting condition and then OFF, and may also turn the device ON with the second setting condition, the power value acquiring section may acquire a first total power value before the device is turned ON by the device manipulating section with the first setting condition and before the device is turned ON by the device manipulating section with the second setting condition, and may acquire a second total power value after the device is turned ON by the device manipulating section with the first setting condition and after the device is turned ON by the device manipulating section with the second setting condition, and the power consumption estimating section may estimate the power consumption for the device with each of the first setting condition and the second setting condition, based on the first total power values and the second total power values for the device with the first setting condition and the second setting condition.

The robot described above may further comprise a power consumption holding section that holds the power consumptions for the first setting condition and the second setting condition in association with the device, the first setting condition, and the second setting condition.

The robot described above may further comprise a temperature sensor that detects a surrounding temperature; and a power consumption holding section that holds the power consumption of the device in association with the device and the temperature detected by the temperature sensor.

In the robot described above, the device manipulating section may receive an ON command or an OFF command from a user for one of the plurality of devices, and may turn the device ON or OFF, and after the ON command or OFF command is received, the power value acquiring section may acquire, as the first total power value, the total power before the device is turned ON or OFF by the device manipulating section and may acquire, as the second total power value, the total power value after the device is turned ON or OFF by the device manipulating section.

In the robot described above, the power consumption estimating section may estimate the power consumption for each of the plurality of devices based on a difference between the first total power value and the second total power value of the device.

In the robot described above, the plurality of devices may be supplied with power from the power supply via a distribution board, and the power sensor may measure the power value in a power line connecting the power supply to the distribution board.

The robot described above further comprises a moving mechanism that moves to respective areas in which the plurality of devices are arranged; a map information holding section that holds map information showing the plurality of devices in association with the respective areas in which the devices are arranged; and a movement control section that controls the moving mechanism to move to the areas in which the devices are arranged, based on the map information.

The summary clause does not necessarily describe all necessary features of the embodiments of the present invention. The present invention may also be a subcombination of the features described above.

### BRIEF DESCRIPTION OF THE DRAWINGS

Fig. 1 shows an overall configuration of a power demand management system according to an embodiment of the present invention.
Fig. 2 shows function blocks of the robot.
Fig. 3 shows exemplary operational state information held by the operational state information holding section.
Fig. 4 is a diagram for describing the process for dividing the overall power consumption pattern into power consumption patterns for each device.
Fig. 5 shows exemplary power consumption information held by the power consumption holding section.
Fig. 6 is a flow chart showing an exemplary process performed by the robot for estimating the power consumption of a plurality of devices that are estimation targets.

### BEST MODE FOR CARRYING OUT THE INVENTION

Hereinafter, some embodiments of the present invention will be described. The embodiments do not limit the invention according to the claims, and all the combinations of the features described in the embodiments are not necessarily essential to means provided by aspects of the invention.

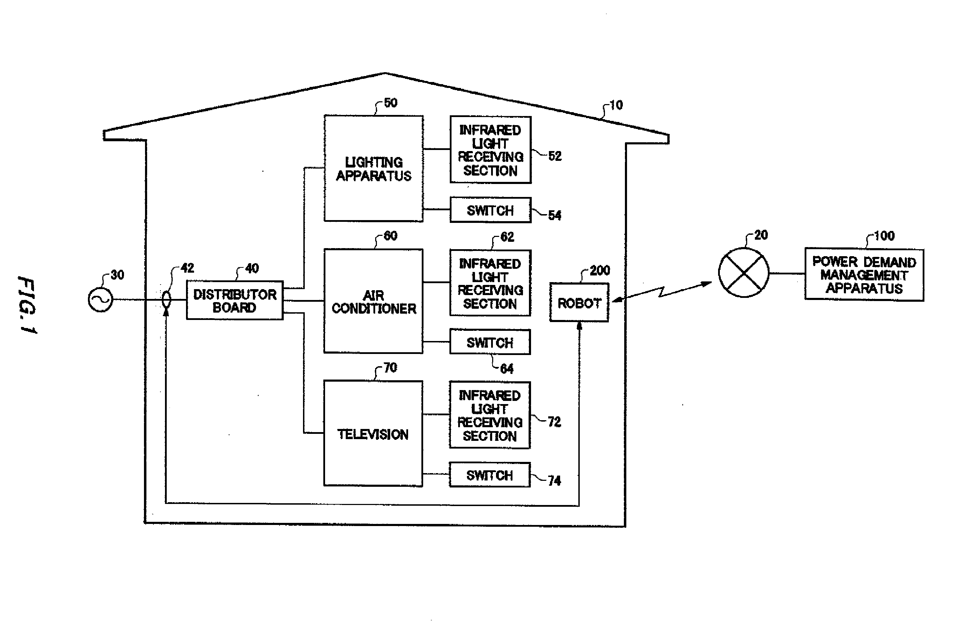

Fig. 1 shows an overall configuration of a power demand management system according to an embodiment of the present invention. The power demand management apparatus 100 acquires power consumption of a plurality of devices arranged in a house 10, from a robot 200 provided in the house 10, and predicts the power consumption of the house 10 based on the power consumption of each device. Furthermore, the power demand management apparatus 100 transmits power restriction instructions to the robot 200, such that the predicted power consumption does not exceed a predetermined target power consumption. The robot 200 can move within the house 10, estimates the power consumption or each device, and transmits this information to the power demand management apparatus 100. In response to power restriction instructions, the robot 200 performs power restriction for a plurality of devices arranged within the house 10. In the present embodiment, the targets of the power consumption estimation are devices arranged within the house 10, but devices outside the house 10 may also be targets of the power consumption estimation. Furthermore, the targets of the power consumption estimation in the present embodiment are devices arranged within the house 10, but devices arranged on a plurality of floors in a building may also be the targets of the power consumption estimation. Yet further, in the present embodiment, a single robot 200 is provided for the house 10, but a plurality of robots 200 may instead be provided for the house 10.

The plurality of devices may be electrical devices that consume power, such as a lighting apparatus 50, an air conditioner 60, and a television 70. The devices are connected to a commercial power supply 30 via a distribution board 40, and the power from the commercial power supply 30 is supplied to the devices. On the input side of the commercial power supply 30 of the distribution board 40, a power sensor 42 is provided that measures the total power value per unit time that is consumed by the house 10, and the power sensor 42 transmits power data indicating the total power value per unit time at predetermined intervals, such as every minute, to the robot 200 via a wireless network. The lighting apparatus 50, the air conditioner 60, and the television 70 respectively include infrared light receiving sections 52, 62, and 72 and switches 54, 64, and 74. The robot 200 may turn the power supplies of the lighting apparatus 50, the air conditioner 60, and the television 70 ON and OFF via the infrared light receiving sections 52, 62, and 72 and the switches 54, 64, and 74. The robot 200 may adjust the brightness of the lighting apparatus 50 via the infrared light receiving section 52 or the switch 54. The robot 200 may adjust the set temperature of the air conditioner 60 via the infrared light receiving section 62 or the switch 64.

The power demand management apparatus 100 may be provided in a facility managed by a specified electric power supplier, for example. The specified electric power supplier can also be referred to as a "power producer and supplier" (PPS). The specified electric power supplier may predict the power demand for the following day via the power demand management apparatus 100 and, based on the predicted power demand, purchase the power for the following day from a power wholesaler or the like in advance and supply this power to the contractor on the following day. When predicting the power demand for the following day, the specified electric power supplier may request that the contractor restrict power at a specified time, for example, and predict via the power demand management apparatus 100 whether the contractor will comply with the request. In this case, when predicting the power demand of the following day, the power demand management apparatus 100 may also consider the power demand that has been restricted by the performance of power restriction at a specified time. Accordingly, by knowing in advance the power consumption of each device used by the contractor, the power demand management apparatus 100 can more accurately predict a decrease in the power consumption resulting from the power restriction. Furthermore, when the power demand management apparatus 100 knows the power consumption of a plurality of devices in advance, the power demand management apparatus 100 can transmit accurate power restriction instructions to the robot 200 in order to prioritize the power restriction of devices having higher power consumption among the plurality of devices. As a result, the power demand management apparatus 100 can cause the robot 200 to efficiently restrict the power demand.

In the manner described above, if the power demand management apparatus 100 knows in advance the power consumption of each of a plurality of devices arranged in the house 10, for example, the power demand management apparatus 100 can more accurately predict the power demand. Furthermore, the power demand management apparatus 100 can cause the robot 200 to efficiently restrict the power demand.

When measuring the power consumption, the power consumption of each device can be measured by providing a power sensor to the power input terminal of each device. However, providing a power sensor to each of a large number of devices arranged in a facility such as the house 10 incurs a high cost. As another possibility, a function for measuring the power consumption can be provided to each device arranged in a facility such as the house 10, and each device can transmit power data indicating the power consumption thereof. However, it is not realistic to provide pre-existing devices with this function or to provide this function in advance to all newly manufactured devices.

Therefore, in the present embodiment, the robot 200 acquires the total power value supplied from the commercial power supply 30 to the devices arranged in the house 10, via a power sensor 42 provided between the commercial power supply 30 and the distribution board 40, and estimates the power consumption of each device based on the total power value. More specifically, the robot 200 turns each of the devices ON and OFF, one at a time. For example, the robot 200 obtains from the power sensor 42, as a first total power value, the total power value immediately prior to the device being turned ON or OFF and also acquires from the power sensor 42, as a second total power value, the total power value immediately after this device is turned ON or OFF. The robot 200 estimates the power consumption of the device that has been turned ON or OFF by calculating the difference between the first total power value and the second total power value.

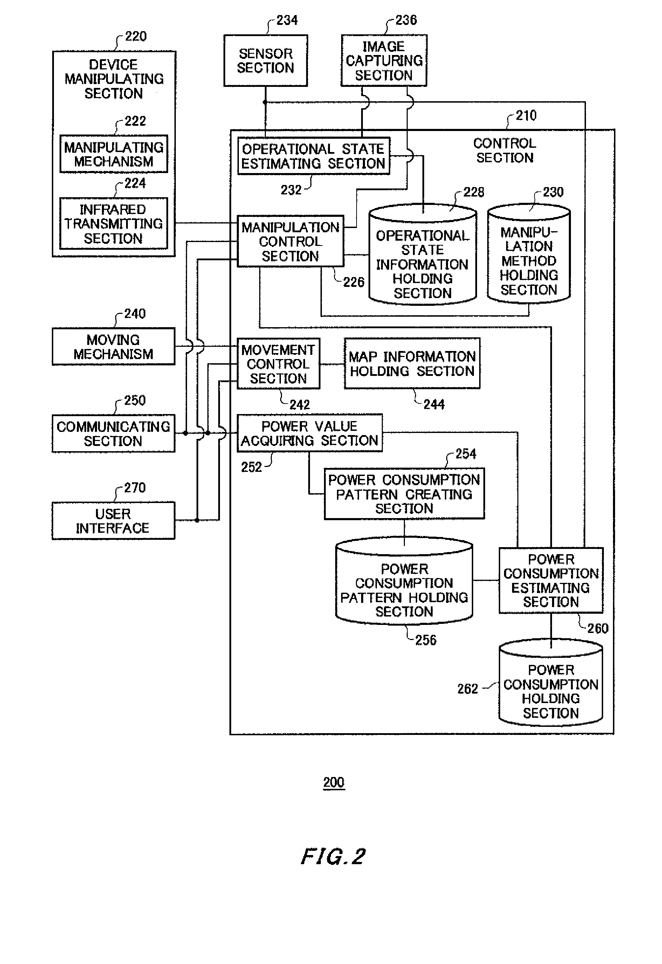

Fig. 2 shows function blocks of the robot 200. The robot 200 includes a control section 210 that controls the overall robot 200, a device manipulating section 220 that manipulates the devices arranged in the house 10, a moving mechanism 240 for moving within the house 10, and a communicating section 250 for communicating with the power demand management apparatus 100 or the like. Furthermore, the robot 200 may include a user interface 270 that inputs information from a user and outputs information to the user. The user interface 270 may be a microphone, speaker, and display, for example. The information from the user may be the designation information indicating the devices on which the power restriction is allowed to be performed or indicating the devices on which the power consumption estimation is allowed to be performed, for example. The robot 200 may include a sensor section 234 such as a temperature sensor that detects the surrounding temperature, a brightness sensor that detects the surrounding brightness, and a person sensor that detects whether a person is present nearby, for example. The robot 200 may include an image capturing section 236 that captures an image of the surrounding area.

The device manipulating section 220 includes a manipulating mechanism 222 and an infrared transmitting section 224. The manipulating mechanism 222 may be a multi-jointed arm.

When measuring the power consumption of each device, the manipulation control section 226 may transmit to the device manipulating section 220 an ON command signal or an OFF command signal indicating a manipulation target device, in order to cause the device manipulating section 220 to perform a process of turning the device ON and then, after a predetermined time has passed, turning the device OFF, for each device, one at a time. Upon receiving the power restriction instructions from the power demand management apparatus 100 via the communicating section 250, the manipulation control section 226 identifies the device on which the power restriction is to be performed. The manipulation control section 226 also identifies the manipulation method for the identified device by referencing the manipulation method holding section 230, and transmits a power restriction manipulation signal to the device manipulating section 220 based on the identified manipulation method. The device manipulating section 220 performs the power restriction on the device based on the power restriction manipulation signal. The manipulation method holding section 230 holds each device in association with a manipulation method for performing power restriction on the device. The manipulation method may be information relating to switches for turning a device ON and OFF, or information relating to a command code of infrared signals for turning a device ON and OFF, adjusting temperature of the device, or adjusting brightness of the device and an identification code for identifying the device.

When an ON manipulation signal or OFF manipulation signal is received from the manipulation control section 226, the manipulating mechanism 222 may turn the switch provided on the device ON or OFF. When the manipulating mechanism 222 receives the power restriction manipulation signal, the manipulating mechanism 222 may turn OFF a switch provided on a device. The manipulation control section 226 may identify the position of the switch of the device based on an image captured by the image capturing section 236, and cause the manipulating mechanism 222 to press the switch at the identified position.

When the infrared transmitting section 224 receives the ON manipulation signal or the OFF manipulation signal from the manipulation control section 226, the infrared transmitting section 224 may transmit an infrared signal including a device identification code and an OFF command or an ON command, toward an infrared light receiving section provided on the device. When the infrared transmitting section 224 receives the power restriction manipulation signal, an infrared signal that includes an identification code of the device and a command code indicating an OFF command may be transmitted toward an infrared light receiving section provided on the device.

When an ON command for the device is received from the user via the user interface 270, the manipulation control section 226 may identify the manipulation method of the device indicated by the ON command and transmit an ON manipulation signal to the device manipulating section 220 based on the identified manipulation method. The manipulation control section 226 may acquire for each device a time at which the device is turned ON and a time at which the device is turned OFF, and may hold these times in the operational state information holding section 228 as the operational state information indicating the operational state of the device in association with the OFF time, the ON time, and the device.

There are cases in which the devices set in the house 10 are directly turned ON or OFF by the user without using the robot 200. Therefore, when necessary, the operational state estimating section 232 may estimate the operational state of a device based on the image captured by the image capturing section 236 and the temperature and brightness detected by the sensor section 234, for example, and hold this information in the operational state information holding section 228 as the operational state information in which the estimated operational information is associated with the device. The operational state estimating section 232 may estimate the operational state of the device by analyzing the image and determining whether the device is currently operating based on whether a lamp such as an LED that is provided on the device and indicates the ON/OFF state is lit up. Furthermore, the operational state estimating section 232 may estimate the operational state of the air conditioner or the lighting apparatus by determining that the air conditioner or lighting apparatus is ON when a rate of change in temperature or brightness is greater than a predetermined rate of change.

The moving mechanism 240 can freely move within the house 10 according to the movement control signal from the movement control section 242, and may be a wheeled moving mechanism, a crawling moving mechanism, or a legged moving mechanism, for example.

When estimating the power consumption of a plurality of devices, the movement control section 242 identifies the position of each area in which a device is arranged by referencing the map information holding section 244, determines a path for sequentially moving the robot 200 to each identified area, and transmits a movement control signal to the moving mechanism 240 based on the determined path.. When the movement instructions from the power demand management apparatus 100 are received via the communicating section 250, the movement control section 242 identifies the position of the area indicated by the movement instructions, determines a path from the current position to the identified position by referencing the map information holding section 244, and transmits to the moving mechanism 240 a movement control signal based on the determined path. The moving mechanism 240 causes the robot 200 to move to the area indicated by the movement instructions by causing the robot 200 to move along the path based on the movement control signal.

The power value acquiring section 252 periodically acquires the total power value per unit time that flows through the power line between the commercial power supply 30 and the distribution board 40, from the power sensor 42 that measures the total power value. The power consumption estimating section 260 acquires from the power value acquiring section 252 a first total power value, which is the total power value prior to the device that is the target of the power consumption estimation being turned ON or OFF by the manipulation control section 226, and also acquires from the power value acquiring section 252 a second total power value, which is the total power value after this device that is the estimation target is turned ON or OFF. The power consumption estimating section 260 estimates the power consumption of the estimation target device by calculating the difference between the first total power value and the second total power value. The power consumption estimating section 260 associates the estimated power consumption with the estimation target device, and holds this information in the power consumption holding section 262.

The power value acquiring section 252 may provide the power consumption pattern creating section 254 with the acquired total power values. The power consumption pattern creating section 254 creates an overall power consumption pattern indicating the change over time of the total power consumption of the house 10 in 24-hour units, based on the total power values provided thereto. Furthermore, the power consumption pattern creating section 254 divides the overall power consumption pattern into power consumption patterns for each device, based on the ON time and OFF time of each device indicated by the operational state information and the change of the power consumption in the overall power consumption pattern, and holds these power consumption patterns in the power consumption pattern holding section 256. The power consumption estimating section 260 may acquire the power values immediately before and immediately after each device is turned ON or OFF, based on the power consumption patterns of the devices held in the power consumption pattern holding section 256, and estimate the power consumption of each device by calculating the difference between the acquired power values.

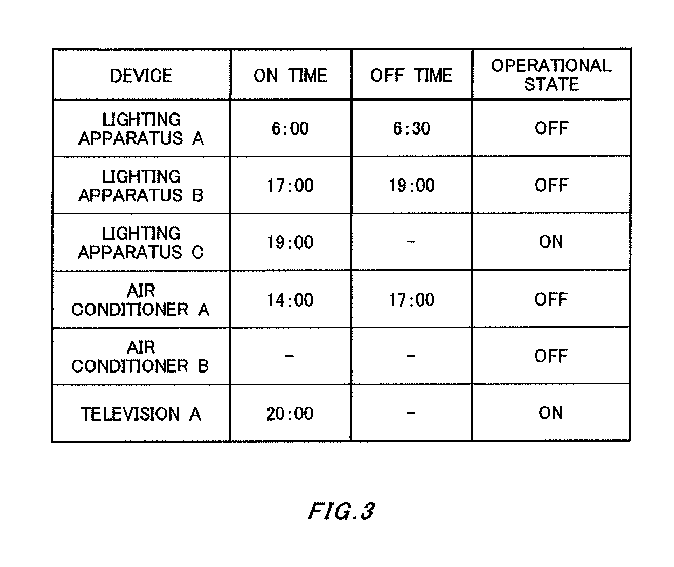

Fig. 3 shows exemplary operational state information held by the operational state information holding section 228. The operational state information indicates, in association with each device, the ON time of the device, the OFF time of the device, and the operational state showing whether the device is operating.

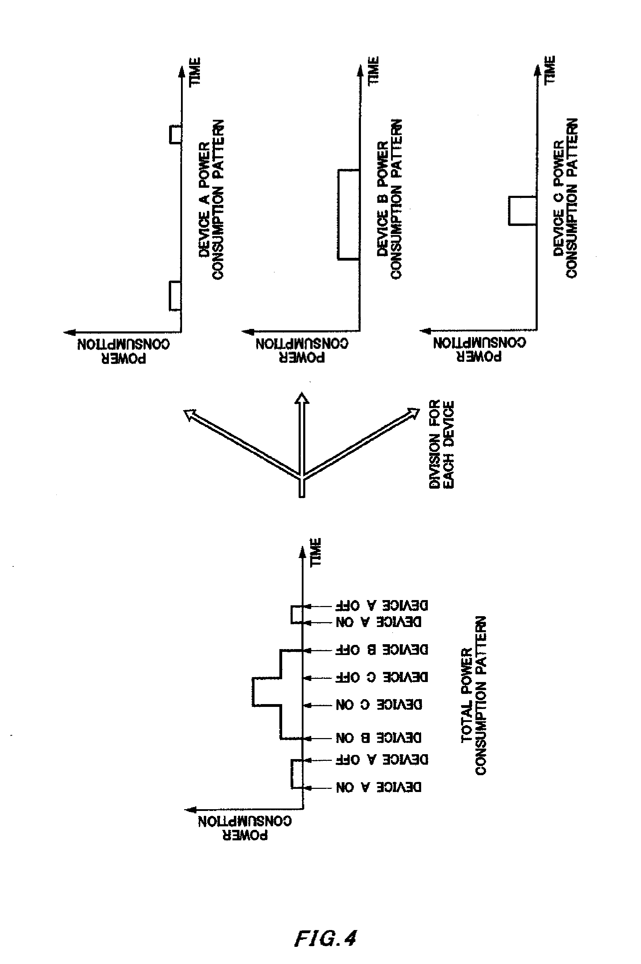

Fig. 4 is a diagram for describing the process by which the power consumption pattern creating section 254 divides the overall power consumption pattern into power consumption patterns for each device. The power consumption pattern creating section 254 maps the ON time and OFF time of each device in the overall power consumption pattern. Next, the power consumption pattern creating section 254 creates the power consumption patterns of each device by extracting, for each device, the amount of change in the power consumption at each of the mapped times. The power consumption pattern creating section 254 may create one month of the power consumption pattern for each device, and may create an average power consumption pattern for each device by averaging the power consumption pattern.

There are devices among the plurality of devices that can operate under a plurality of setting conditions. For example, the brightness of the lighting apparatus 50 can be set. Furthermore, the air conditioner 60 can be set for heating, cooling, dehumidifying, or as a fan, and the temperature, wind speed, and the like can also be set. In this way, in the case of a device that can operate with a plurality of setting conditions, it is possible that the power consumption changes according to the setting conditions.

In the case of a device that can operate with a plurality of setting conditions via the device manipulating section 220, the robot 200 may sequentially turn ON the predicted target device with each setting condition. In this case, the power consumption estimating section 260 acquires the total power value before and after the device is turned ON, for each of the setting conditions, via the power value acquiring section 252. Furthermore, the power consumption estimating section 260 may estimate the power consumption for each setting condition based on the difference between the total power values acquired for the setting condition. In this case, the power consumption estimating section 260 associates the estimation target device, each of the setting conditions of the device, and the power consumption for each setting condition with each other, and holds this information in the power consumption holding section 262.

There may be a case in which the power consumption of the air conditioner 60 changes due to the surrounding temperature, for example. Therefore, the power consumption estimating section 260 may acquire the temperature at the time when the power consumption is estimated, via a temperature sensor included in the sensor section 234, associate the estimation target device, the estimated power consumption, and the temperature with each other, and hold this information in the power consumption holding section 262.

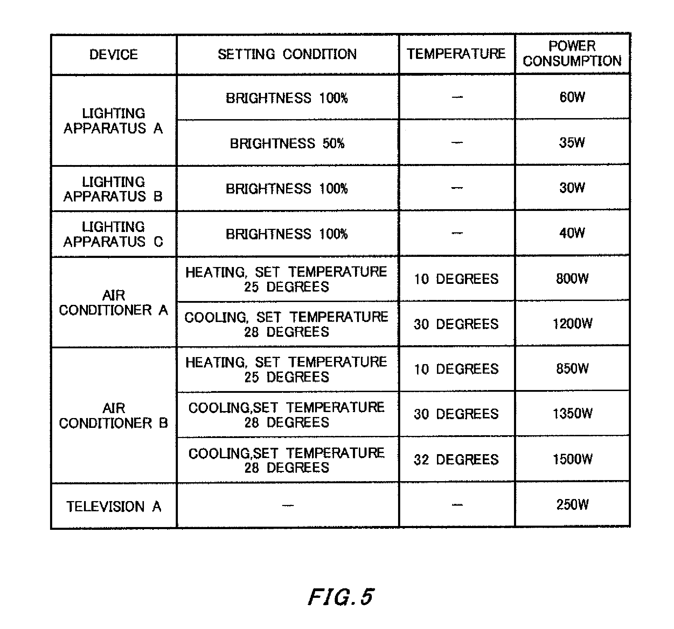

Fig. 5 shows exemplary power consumption information held by the power consumption holding section 262. In the power consumption information, each device is associated with a power consumption. Furthermore, in the power consumption information, each device may be associated with a setting condition or temperature.

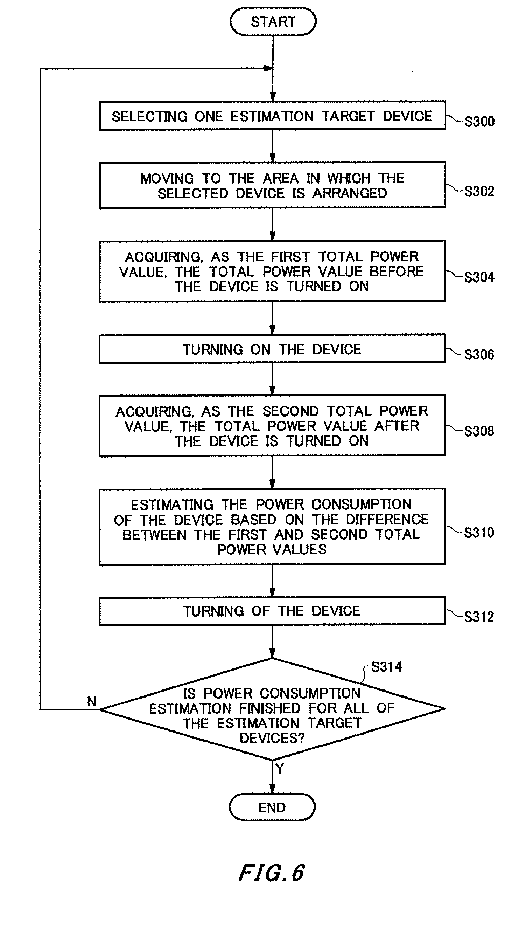

Fig. 6 is a flow chart showing an exemplary process performed by the robot 200 for estimating the power consumption of a plurality of devices that are estimation targets.

The manipulation control section 226 selects one estimation target device (S300). The manipulation control section 226 may sequentially select devices that are held in the manipulation method holding section 230 in association with a manipulation method, for example. When the manipulation control section 226 selects an estimation target device, the movement control section 242 references the map information to identify the position of the area in which the selected estimation target device is arranged, determines a path from the current position to the identified position, and transmits a movement control signal to the moving mechanism 240 that causes the robot 200 to move along the determined path. As a result of the moving mechanism 240 moving based on the movement control signal, the robot 200 moves to the area in which the estimation target device is arranged (S302). Next, the power consumption estimating section 260 acquires, as the first total power value, the total power value immediately before the estimation target device is turned ON, via the power value acquiring section 252 (S304). After this, the manipulation control section 226 transmits an ON manipulation signal to the device manipulating section 220 to turn ON the estimation target device, and the device manipulating section 220 turns ON the estimation target device (S306). The power consumption estimating section 260 acquires, as the second total power value, the total power value after the device has been turned ON (S308). The power consumption estimating section 260 may acquire, as the second total power value, the total power value immediately after the device is turned ON, or the total power value obtained after a predetermined amount of time has passed from when the device was turned ON. Next, the power consumption estimating section 260 estimates the power consumption of the estimation target device to be the difference between the first total power value and the second total power value (S310). After the power consumption estimating section 260 has acquired the second total power value, the manipulation control section 226 turns OFF the estimation target device via the device manipulating section 220 (S312). After this, the manipulation control section 226 determines whether the power consumption estimation has been completed for all of the estimation target devices (S314). The manipulation control section 226 may determine whether the power consumption estimation has been completed for all of the estimation target devices by determining whether the power consumption estimation for all of the devices held in the manipulation method holding section 230 in association with the manipulation method has been completed. If the manipulation control section 226 determines that the power consumption estimation has not been completed for all of the estimation target devices, the robot 200 repeats the processes from step S300 to step S314.

In the manner described above, the robot 200 acquires the total power levels before and after a device is turned ON or OFF, for each device, one at a time, and estimates the power consumption for each device based on the differences between the power values acquired for the device.

At predetermined times, times when the user is not present, or when instructions are received from the user, the robot 200 may estimate the power consumption of a plurality of devices by sequentially turning the devices ON and OFF. Furthermore, when performing power restriction on a device or performing a power consumption estimation on a plurality of devices, for example, the robot 200 may ask the user whether the device may be turned ON or OFF prior to actually turning the manipulation target device ON or OFF, and may actually turn the device ON or OFF when the user provides a response indicating that the device may be turned ON or OFF. Furthermore, when an ON command or OFF command for a device is received from the user via the user interface 270, the robot 200 may estimate the power consumption of the device that is the target of the ON command or OFF command. In other words, after receiving the ON command or OFF command, the power consumption estimating section 260 may acquire via the power value acquiring section 252, as the first total power value, the power value at a time before the device is tuned ON or OFF by the device manipulating section 220. Furthermore, the power consumption estimating section 260 acquires via the power value acquiring section 252, as the second total power value, the power value at a time after the device is turned ON or OFF by the device manipulating section 220 after the ON command or OFF command is received. The power consumption estimating section 260 estimates the power consumption of the device that has been turned ON or OFF by calculating the difference between the acquired first total power value and second total power value.

The power consumption estimating section 260 may periodically estimate the power consumption of each device, and may estimate the power consumption of the devices by calculating an average of the estimated power consumptions.

In order to estimate the power consumption of each device, while moving around the house 10, the robot 200 may individually turn ON or OFF each of the devices arranged in the house 10, associate the ON time and OFF time with each device, and hold this information in the operational state information holding section 228. By individually turning each device ON and OFF, the robot 200 can easily separate the power consumption pattern of each device from the overall power consumption pattern, thereby easily estimating the power consumption of each device.

The above embodiments describe an example in which the robot 200 estimates the power consumption of each device. Instead, the power demand management apparatus 100 may be provided with a robot control section for controlling the robot 200, and may function as a portion of a power consumption estimating system to estimate the power consumption of each device. In this case, the robot 200 turns the devices ON and OFF one by one while moving, based on the instructions of the power demand management apparatus 100, and the power demand management apparatus 100 may acquire the total power value before and after each device is turned ON or OFF by the robot 200 via the power sensor 42 and calculate the difference between the power values acquired for each device, thereby estimating the power consumption of each device.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### List of Reference Numerals

- 10:: house,
- 30:: commercial power supply,
- 40:: distribution board,
- 42:: power sensor,
- 50:: lighting apparatus,
- 60:: air conditioner,
- 70:: television,
- 100:: power demand management apparatus,
- 200:: robot,
- 210:: control section,
- 220:: device manipulating section,
- 222:: manipulating mechanism,
- 224:: infrared transmitting section,
- 226:: manipulation control section,
- 228:: operational state information holding section,
- 230:: manipulation method holding section,
- 232:: operational state estimating section,
- 234:: sensor section,
- 236:: image capturing section,
- 240:: moving mechanism,
- 242:: movement control section,
- 244:: map information holding section,
- 250:: communicating section,
- 252:: power value acquiring section,
- 254:: power consumption pattern creating section,
- 256:: power consumption pattern holding section,
- 260:: power consumption estimating section,
- 262:: power consumption holding section,
- 270:: user interface

## Claims

1. A robot (200) comprising:
a device manipulating section (220) that turns ON and OFF a plurality of devices (50, 60, 70) that operate by receiving power from a power supply;
a moving mechanism (240) that moves the robot (200) to respective areas in which the plurality of devices (50, 60, 70) are arranged;
a map information holding section (244) that holds map information showing the plurality of devices in association with the respective areas in which the devices are arranged;
a movement control section (242) that controls the moving mechanism (240) to move the robot (200) to the areas in which the devices (50, 60, 70) are arranged, based on the map information;
a power value acquiring section (252) that acquires a first total power value that is a power value before one of the devices is turned ON or OFF by the device manipulating section (220) and a second total power value that is a power value after the device is turned ON or OFF, via a power sensor (42) that measures a total power value supplied to the plurality of devices from the power supply; and
a power consumption estimating section (260) that estimates power consumption of the device based on the first total power value and the second total power value.

2. The robot (200) according to Claim 1, wherein
one of the plurality of devices (50, 60, 70) is capable of operating with a plurality of setting conditions including a first setting condition and a second setting condition,
the device manipulating section (220) turns the device ON with the first setting condition and then OFF, and also turns the device ON with the second setting condition,
the power value acquiring section (252) acquires a first total power value before the device is turned ON by the device manipulating section (220) with the first setting condition and before the device is turned ON by the device manipulating section (220) with the second setting condition, and acquires a second total power value after the device is turned ON by the device manipulating section (220) with the first setting condition and after the device is turned ON by the device manipulating section (220) with the second setting condition, and
the power consumption estimating section (260) estimates the power consumption for the device with each of the first setting condition and the second setting condition, based on the first total power values and the second total power values for the device with the first setting condition and the second setting condition.

3. The robot according to Claim 2, further comprising a power consumption holding section (256) that holds the power consumptions for the first setting condition and the second setting condition in association with the device, the first setting condition, and the second setting condition.

4. The robot according to Claim 1, further comprising:
a temperature sensor (234) that detects a surrounding temperature; and
a power consumption holding section (262) that holds the power consumption of the device in association with the device and the temperature detected by the temperature sensor.

5. The robot according to any one of Claims 1 to 4, wherein
the device manipulating section (220) receives an ON command or an OFF command from a user for one of the plurality of devices, and turns the device ON or OFF, and
after the ON command or OFF command is received, the power value acquiring section (252) acquires, as the first total power value, the total power before the device is turned ON or OFF by the device manipulating section (220) and acquires, as the second total power value, the total power value after the device is turned ON or OFF by the device manipulating section (220).

6. The robot according to any one of Claims 1 to 5, wherein
the power consumption estimating section (260) estimates the power consumption for each of the plurality of devices based on a difference between the first total power value and the second total power value of the device.

7. The robot according to any one of Claims 1 to 6, wherein
the plurality of devices (50, 60, 70) are supplied with power from the power supply via a distribution board, and
the power sensor (42) measures the power value in a power line connecting the power supply to the distribution board.

8. A power consumption estimating system comprising a robot (200) in accordance with any of claims 1 to 7 and a robot control section (100) that causes the robot to turn ON and OFF a plurality of devices that operate by receiving power from a power supply.

## Patentansprüche

1. Roboter (200), welcher aufweist:
eine Vorrichtungsbetätigungsschaltung (220), die mehrere Vorrichtungen (50, 60, 70), die durch Empfangen von Energie von einer Energiequelle betrieben werden, ein- und ausschaltet;
einen Bewegungsmechanismus (240), der den Roboter (200) zu jeweiligen Bereichen, in denen die mehreren Vorrichtungen (50, 60, 70) angeordnet sind, bewegt;
eine Karteninformations-Halteschaltung (240), die Karteninformationen speichert, die die mehreren Vorrichtungen in Beziehung zu den jeweiligen Bereichen, in denen die Vorrichtungen angeordnet sind, zeigen;
eine Bewegungssteuerschaltung (242), die den Bewegungsmechanismus (240) steuert, um den Roboter (200) zu den Bereichen, in denen die Vorrichtungen (50, 60, 70) angeordnet sind, auf der Grundlage der Karteninformationen zu bewegen;
eine Energiewert-Erfassungsschaltung (252), die einen ersten Gesamtenergiewert, der ein Energiewert ist, bevor eine der Vorrichtungen durch die Vorrichtungsbetätigungsschaltung (220) ein- oder ausgeschaltet wird, und einen zweiten Gesamtenergiewert, der ein Energiewert ist, nachdem die Vorrichtung ein- oder ausgeschaltet ist, über einen Energiesensor (42), der einen von der Energiequelle zu den mehreren Vorrichtungen gelieferten Gesamtenergiewert misst, erfasst; und
eine Energieverbrauchs-Schätzschaltung (260), die einen Energieverbrauch der Vorrichtung auf der Grundlage des ersten Gesamtenergiewerts und des zweiten Gesamtenergiewerts schätzt.

2. Roboter (200) nach Anspruch 1, bei dem
eine der mehreren Vorrichtungen (50, 60, 70) in der Lage ist, mit mehreren Einstellbedingungen, enthaltend eine erste Einstellbedingung und eine zweite Einstellbedingung, betrieben zu werden,
die Vorrichtungsbetätigungsschaltung (220) die Vorrichtung mit der ersten Einstellbedingung ein- und dann ausschaltet und auch die Vorrichtung mit der zweiten Einstellbedingung einschaltet,
die Energiewert-Erfassungsschaltung (252) einen ersten Gesamtenergiewert erfasst, bevor die Vorrichtung durch die Vorrichtungsbetätigungsschaltung (220) mit der ersten Einstellbedingung eingeschaltet wird und bevor die Vorrichtung durch die Vorrichtungsbetätigungsschaltung (220) mit der zweiten Einstellbedingung eingeschaltet wird, und einen zweiten Gesamtenergiewert erfasst, nachdem die Vorrichtung durch die Vorrichtungsbetätigungsschaltung (220) mit der ersten Einstellbedingung eingeschaltet wurde und nachdem die Vorrichtung durch die Vorrichtungsbetätigungsschaltung (220) mit der zweiten Einstellbedingung eingeschaltet wurde, und
die Energieverbrauchs-Schätzschaltung (260) den Energieverbrauch für die Vorrichtung mit jeweils der ersten Einstellbedingung und der zweiten Einstellbedingung auf der Grundlage der ersten Gesamtenergiewerte und der zweiten Gesamtenergiewerte für die Vorrichtung mit der ersten Einstellbedingung und der zweiten Einstellbedingung schätzt.

3. Roboter nach Anspruch 2, weiterhin aufweisend eine Energieverbrauchs-Halteschaltung (256), die den Energieverbrauch jeweils für die erste Einstellbedingung und die zweite.Einstellbedingung in Beziehung zu der Vorrichtung, der ersten Einstellbedingung und der zweiten Einstellbedingung speichert.

4. Roboter nach Anspruch 1, weiterhin aufweisend:
einen Temperatursensor (234), der eine Umgebungstemperatur erfasst; und
eine Energieverbrauchs-Halteschaltung (262), die den Energieverbrauch der Vorrichtung in Beziehung zu der Vorrichtung und der von dem Temperatursensor erfassten Temperatur speichert.

5. Roboter nach einem der Ansprüche 1 bis 4, bei dem
die Vorrichtungsbetätigungsschaltung (220) einen EIN-Befehl oder einen AUS-Befehl von einem Benutzer für eine der mehreren Vorrichtungen empfängt und die Vorrichtung ein- oder ausschaltet und,
nachdem der EIN-Befehl oder AUS-Befehl empfangen wurde, die Energiewert-Erfassungsschaltung (252) als den ersten Gesamtenergiewert die Gesamtenergie erfasst, bevor die Vorrichtung durch die Vorrichtungsbetätigungsschaltung (220) ein- oder ausgeschaltet wird, und als den zweiten Gesamtenergiewert den Gesamtenergiewert erfasst, nachdem die Vorrichtung durch die Vorrichtungsbetätigungsschaltung (220) ein- oder ausgeschaltet ist.

6. Roboter nach einem der Ansprüche 1 bis 5, bei dem
die Energieverbrauchs-Schätzschaltung (260) den Energieverbrauch für jede der mehreren Vorrichtungen auf der Grundlage einer Differenz zwischen dem ersten Gesamtenergiewert und dem zweiten Gesamtenergiewert der Vorrichtung schätzt.

7. Roboter nach einem der Ansprüche 1 bis 6, bei dem
den mehreren Vorrichtungen (50, 60, 70) Energie von der Energiequelle über ein Verteilermodul zugeführt wird und
der Energiesensor (42) den Energiewert in einer Versorgungsleitung, die die Energiequelle mit dem Verteilermodul verbindet, misst.

8. Energieverbrauchs-Schätzsystem, aufweisend einen Roboter (200) gemäß einem der Ansprüche 1 bis 7 und eine Robotersteuerschaltung (100), die bewirkt, dass der Roboter mehrere Vorrichtungen, die durch Empfangen von Energie von einer Energiequelle betrieben werden, ein- und ausschaltet.

## Revendications

1. Robot (200) comprenant :
une section de manipulation de dispositif (220) qui active et désactive les dispositifs d'une pluralité de dispositifs (50, 60, 70) qui fonctionnent en recevant de l'énergie en provenance d'une alimentation ;
un mécanisme de déplacement (240) qui déplace le robot (200) jusqu'à des zones respectives dans lesquelles chacun de la pluralité de dispositifs (50, 60, 70) est agencé ;
une section de maintien d'information de carte (244) qui maintient une information de carte qui représente la pluralité de dispositifs en association avec les zones respectives dans lesquelles les dispositifs sont agencés ;
une section de commande de déplacement (242) qui commande le mécanisme de déplacement (240) afin de déplacer le robot (200) jusqu'aux zones dans lesquelles les dispositifs (50, 60, 70) sont agencés, sur la base de l'information de carte ;
une section d'acquisition de valeur d'énergie (252) qui acquiert une première valeur d'énergie totale qui est une valeur d'énergie avant que l'un des dispositifs ne soit activé ou désactivé par la section de manipulation de dispositif (220) et une seconde valeur d'énergie totale qui est une valeur d'énergie après que le dispositif est activé ou désactivé, via un capteur d'énergie (42) qui mesure une valeur d'énergie totale fournie aux dispositifs de la pluralité de dispositifs depuis l'alimentation ; et
une section d'estimation de consommation d'énergie (260) qui estime la consommation d'énergie du dispositif sur la base de la première valeur d'énergie totale et de la seconde valeur d'énergie totale.

2. Robot (200) selon la revendication 1, dans lequel :
l'un de la pluralité de dispositifs (50, 60, 70) peut fonctionner conformément à une pluralité de conditions de consigne incluant une première condition de consigne et une seconde condition de consigne ;
la section de manipulation de dispositif (220) active le dispositif conformément à la première condition de consigne puis le désactive et active également le dispositif conformément à la seconde condition de consigne ;
la section d'acquisition de valeur d'énergie (252) acquiert une première valeur d'énergie totale avant que le dispositif ne soit activé par la section de manipulation de dispositif (220) conformément à la première condition de consigne et avant que le dispositif ne soit activé par la section de manipulation de dispositif (220) conformément à la seconde condition de consigne et acquiert une seconde valeur d'énergie totale après que le dispositif est activé par la section de manipulation de dispositif (220) conformément à la première condition de consigne et après que le dispositif est activé par la section de manipulation de dispositif (220) conformément à la seconde condition de consigne ; et
la section d'estimation de consommation d'énergie (260) estime la consommation d'énergie pour le dispositif conformément à chaque condition de consigne prise parmi la première condition de consigne et la seconde condition de consigne sur la base des premières valeurs d'énergie totales et des secondes valeurs d'énergie totales pour le dispositif conformément à la première condition de consigne et à la seconde condition de consigne.

3. Robot selon la revendication 2, comprenant en outre une section de maintien de consommation d'énergie (256) qui maintient les consommations d'énergie pour la première condition de consigne et pour la seconde condition de consigne en association avec le dispositif, la première condition de consigne et la seconde condition de consigne.

4. Robot selon la revendication 1, comprenant en outre :
un capteur de température (234) qui détecte une température d'environnement ; et
une section de maintien de consommation d'énergie (262) qui maintient la consommation d'énergie du dispositif en association avec le dispositif et avec la température détectée par le capteur de température.

5. Robot selon l'une quelconque des revendications 1 à 4, dans lequel :
la section de manipulation de dispositif (220) reçoit une commande d'activation ou une commande de désactivation émanant d'un utilisateur pour la pluralité de dispositifs et active ou désactive le dispositif ; et
après que la commande d'activation ou la commande de désactivation est reçue, la section d'acquisition de valeur d'énergie (252) acquiert, en tant que première valeur d'énergie totale, l'énergie totale avant que le dispositif ne soit activé ou désactivé par la section de manipulation de dispositif (220) et acquiert, en tant que seconde valeur d'énergie totale, la valeur d'énergie totale après que le dispositif est activé ou désactivé par la section de manipulation de dispositif (220).

6. Robot selon l'une quelconque des revendications 1 à 5, dans lequel :
la section d'estimation de consommation d'énergie (260) estime la consommation d'énergie pour chacun de la pluralité de dispositifs sur la base d'une différence entre la première valeur d'énergie totale et la seconde valeur d'énergie totale pour le dispositif.

7. Robot selon l'une quelconque des revendications 1 à 6, dans lequel :
les dispositifs de la pluralité de dispositifs (50, 60, 70) sont alimentés avec de l'énergie en provenance de l'alimentation via une carte de distribution ; et
le capteur d'énergie (42) mesure la valeur d'énergie dans une ligne d'alimentation qui connecte l'alimentation à la carte de distribution.

8. Système d'estimation de consommation d'énergie comprenant un robot (200) selon l'une quelconque des revendications 1 à 7 et une section de commande de robot (100) qui commande le robot pour qu'il active et désactive une pluralité de dispositifs qui fonctionnent en recevant de l'énergie en provenance d'une alimentation.
